# EUROPEAN PATENT APPLICATION

(11) **EP 1 770 512 A2**
(43) Date of publication of application: **04.04.2007**
(21) Application number: 06120167.9
(22) Date of filing: 06.09.2006
(51) Int. Cl.: G06F 9/445

(54) **Method and system for updating software**

(30) Priority: 23.09.2005 KR 20050088691
(71) Applicant: Samsung Electronics Co., Ltd, Suwon-si, Gyeonggi-do 442-742 (KR)
(72) Inventor: LEE, Jong-suk, Gyeonggi-do (KR)
(74) Representative: Brandon, Paul Laurence

(57) **Abstract**

A method and system are provided for updating software in an apparatus having limited storage, and a computer readable recording medium storing the method. The method includes performing a transaction of managing state information on an update transaction and state information on the software component, downloading a new version of a software component from the server, and overwriting the software component to be updated with the new version of the software component. To update a resource, the system updates an application first, downloads a new version of a resource from the server through the network connection unit without deleting the resource, and, after rebooting the device, completes the resource update. Therefore, it is possible to effectively update software and recover an update error in a device such as a portable terminal having limited storage, and solve version incompatibility between an application and a resource according to the software update.

## Description

The present invention relates to methods and systems for updating software, and to computer recording media storing the method.

A variety of portable terminals such as mobile communication terminals, personal digital assistants (PDAs), and Windows CE devices are being rapidly developed. Various functions are newly converged to portable terminals due to digital convergence, and a model change period becomes shorter. Therefore, it is highly possible that erroneously manufactured portable terminals can be distributed to the market. Also, after portable terminals are completely developed, upgraded software is released to provide an additional function.

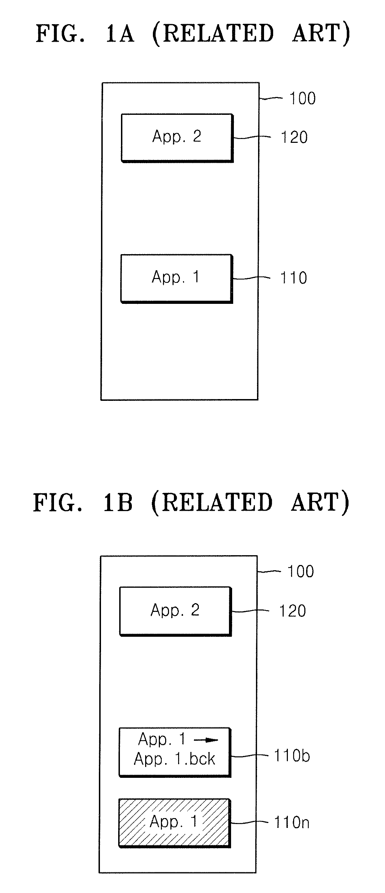

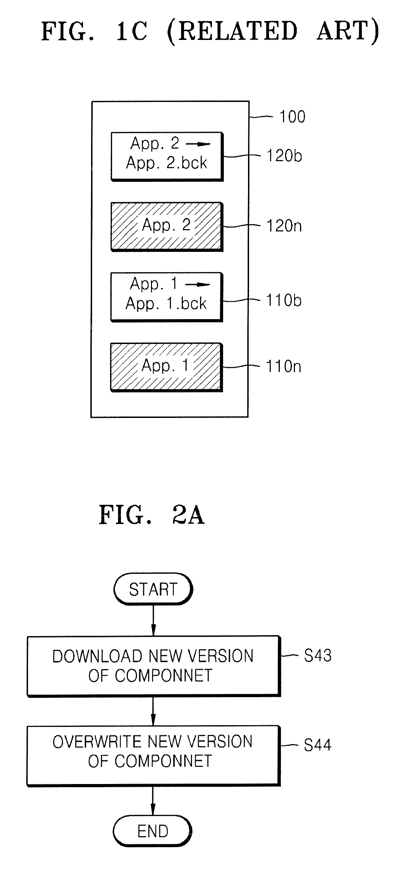

Although an automatic software update function is provided to portable terminals, since most portable terminals do not have sufficient storage, it is difficult to develop an update system, and the software upgrade function cannot be properly used due to a lack of memory. FIGS. 1A, 1B, and 1C illustrate a memory content conversion process using a related art software update method. Referring to FIG. 1A, two software components, an application App. 1 110 and an application App. 2 120, are installed in a non-volatile memory 100. Referring to FIG. 1B, the application App. 1 110 is converted into a backup file App.1.bck 110b, and an application App. 1 110n is downloaded and stored. Referring to FIG. 1C, the application App. 2 120 is converted into a backup file App.2.bck 120b, and an application App. 2 120n is downloaded and stored. Therefore, the two software components are automatically updated.

As mentioned above, the related art software update method requires a memory two times the magnitude of the two software components since an existing file is stored as its backup file and a new file is received. The related art software update method is used to recover a system when a software update is stopped due to an external factor. However, the related art method has a disadvantage that an automatic update function does not operate in an apparatus whose memory is not two times the magnitude of a software component. Such a disadvantage is fatal in portable terminals having limited memory.

Also, most portable terminals do not solve a problem of version incompatibility caused by dynamic loading. In detail, when a resource A and an application B using the resource A are updated, a previous version of application B that is stored in a random access memory (RAM) uses the updated resource A until a device is rebooted, which causes the version incompatibility.

Preferred embodiments of the present invention aim to provide a method and system for automatically updating a software component in a device having limited memory, recovering an update error occurred when the update is stopped, and overcoming incompatibility between a resource and an application, and a computer readable recording medium storing a program performing the method.

According to one aspect of the present invention, there is provided a software update method of updating a software component installed in a device connected to a server, the method comprising: performing an update transaction of downloading a component of a new version from the server and overwriting the component to be updated with the component of the new version, while managing state information on the transaction and state information on the component.

The performing of the transaction may comprise: starting the transaction by recording the state information on the transaction as "start"; downloading the component by changing the state information on the component to be updated to "download", changing previous information on the component to current information on the component, downloading the new version of the component from the server, deleting the component, and storing the new version of the component; updating the component by changing the state information on the component as "update", and changing current information on the component to new information on the new version of the component; completing the update of the component by changing the state information on the component to "done"; and ending the transaction by changing the state information on the transaction to "end".

The previous information, the current information, and the new information may further comprise information on a version of the component.

The method may further comprise: comparing current version information on the component installed in the device with component version information stored in the server to determine a component to be updated.

The method may further comprise: if a plurality of components is determined to be updated, downloading, updating, and completing each of the plurality of components between starting and ending the transaction.

According to another aspect of the present invention, there is provided a software update method of updating an application installed in a device connected to a server and a resource used by the application, the method comprising: downloading a new version of an application from the server and updating the application; and downloading a new version of a resource from the server, rebooting the device, and then changing current information on the resource to information on the new version of the resource.

According to another aspect of the present invention, there is provided a software update method of updating an application installed in a device connected to a server and a resource used by the application, the method comprising: starting a transaction by recording state information on the transaction as "start"; updating the application by downloading a new version of an application from the server; changing state information on the resource to "download", changing previous information on the resource to current information on the resource, and downloading a new version of a resource from the server; and changing the state information on the resource to "pending".

The method may further comprise: at the time of rebooting the device, changing current information on the "pending" resource to information on the new version of the resource, and changing the state information on the resource to "done"; and ending the transaction by changing the state information on the transaction to "end".

The method may further comprise: deleting the previous version of the resource.

According to another aspect of the present invention, there is provided a software update method of updating a software component installed in a device connected to a server, the method comprising: determining whether a software update is stopped before a transaction is ended; and if the transaction is stopped, recovering the transaction by determining a component whose update is stopped by checking state information on the component, and performing at least one process after the update is stopped according to state information on the component whose update is stopped.

If state information on the transaction is "start", it is determined that the software update may be stopped.

The recovering of the transaction may further comprise: if there is no state information on the component whose update is stopped, changing the state information on the component to "download", changing the previous information on the component to the current information on the component, downloading the new version of the component from the server, overwriting the component with the new version of the downloaded component, changing the state information on the component to "update", changing the current information on the component to new information on the new version of the component, and changing the state information on the component to "done"; if the state information on the component whose update is stopped is "download", changing the previous information on the component to the current information on the component, downloading a new version of a component from the server, overwriting the component with the new version of the component, changing the state information on the component to "update", changing the current information on the component to new information on the component, and changing the state information to "done"; if the state information on the component whose update is stopped is "update", changing the current information on the component to the new information on the component, and changing the state information on the component to "done"; and if the state information on the component whose update is stopped is "pending", changing the current information on the component to the new information on the component, and changing the state information on the component to "done".

The method may further comprise: comparing current version information on the component installed in the device with a component version stored in the server, and determining a component to be updated; and if there is a component to be updated other than the component whose update is stopped, changing state information on the component to be updated to "download", changing previous information on the component to be updated to current information, downloading a new version of a component from the server, overwriting the component to be updated with the new version of the downloaded component, changing state information on the component to be updated to "update", changing the current information on the component to be updated to new information, and changing the state information on the component to be updated to "done".

According to another aspect of the present invention, there is provided a software update system for updating a software component installed therein, the system comprises; a network connection unit downloading a new version of a component from a server; a non-volatile memory storing a plurality of software components, configuration information including information on the update of each of the components, and an update engine that updates the component to the downloaded component using the configuration information; a random access memory (RAM) temporarily storing the component and the update engine; and a processor loading the component and the update engine to the RAM and executing them.

Further features of the present invention are set out in the appended claims.

The present invention will become more apparent by describing in detail exemplary embodiments thereof with reference to the attached drawings in which:
FIGS. 1A, 1B, and 1C illustrate a memory content conversion process using a related art software update method;
FIGS. 2A and 2B are flowcharts illustrating a software update method according to an exemplary embodiment of the present invention;
FIG. 3 is a flowchart illustrating a method of updating a plurality of software components according to an exemplary embodiment of the present invention;
FIGS. 4A, 4B, 4C, 4D, 4E, and 4F illustrate memory content change process using a software update method according to an exemplary embodiment of the present invention;
FIG. 5 is a flowchart illustrating a method of updating an application and a resource according to an exemplary embodiment of the present invention;
FIG. 6 is a flowchart illustrating a system rebooting method when both application and resource are updated according to an exemplary embodiment of the present invention;
FIGS. 7A, 7B, 7C, 7D, 7E, and 7F illustrate a memory content change process when both application and resource are updated according to an exemplary embodiment of the present invention;
FIGS. 8A and 8B are flowcharts illustrating a software update error recovery mechanism according to an exemplary embodiment of the present invention; and
FIG. 9 is a block diagram of a software update system according to an exemplary embodiment of the present invention.

Hereinafter, exemplary embodiments of the present invention will be described in detail with reference the accompanying drawings.

FIG. 2A is a flowchart illustrating a software update method according to an exemplary embodiment of the present invention. Referring to FIG. 2A, while managing state information on an update transaction and state information on a component, a new version of a component is downloaded from a server (S43), and the downloaded new version of the component is written over a component to be updated (S44) to update software components. The state information on the update transaction is changed according to the state of the update transaction, and the state information on the component is changed according to the state of the component, thereby updating or not updating the component according to the state of the component.

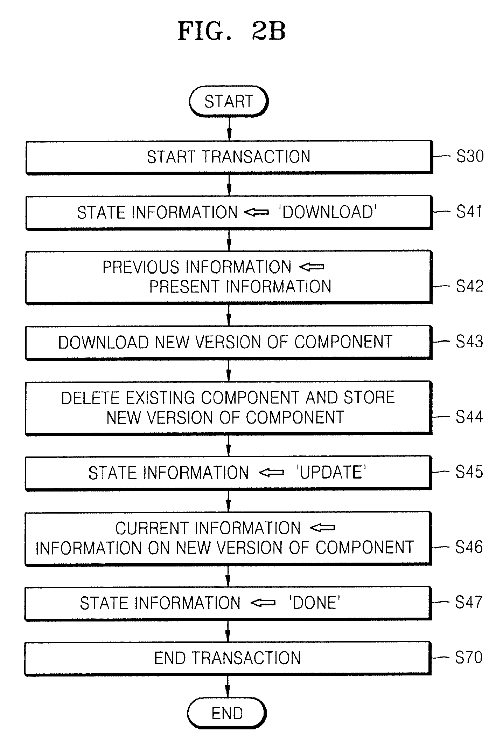

FIG. 2B is a flowchart illustrating a software update method according to an exemplary embodiment of the present invention. Referring to FIG. 2B, the state information on the update transaction and information on software components are used to update the software components and are stored in a component configuration database (DB). The component configuration DB may include the state information on the update transaction indicating the start and the end of the update transaction, components identifiers, current information on a version of a currently installed component and the memory address of the component recorded in a memory, component state information on a current state of the component update, previous information on a version and address before the component is updated, etc. The state information on the update transaction may be "start" or "end". The state information on the component may be "download", "update", "done", etc.

Before the update is started, the state information on the update transaction is set to "start", and the software update transaction is started (S30).

An item corresponding to the state information on the component to be updated is changed to "download" (S41), and the previous information on the component is changed to current information on the currently installed component (S42). The current information can be obtained by reading current information on the component configuration DB. A new version of a component is downloaded from a server through a network (S43), the currently installed component is deleted from a memory, and the new downloaded version of the component is stored (S44). A new file is written over an existing file without making a backup file of the existing file, thereby effectively updating software in an apparatus having limited memory.

After the downloaded component is stored, state information on the component is changed to "update" (S45), and the current information on the component is changed to information on the new version of the component (S46). In detail, a version and a memory address of the downloaded component are recorded in an item of the current information on the component configuration DB. After the component is updated, the state information on the component is changed to "done" (S47) indicating that the update is completed, and the state information on the update transaction is changed to "end" indicating that the update transaction is successfully ended (S70).

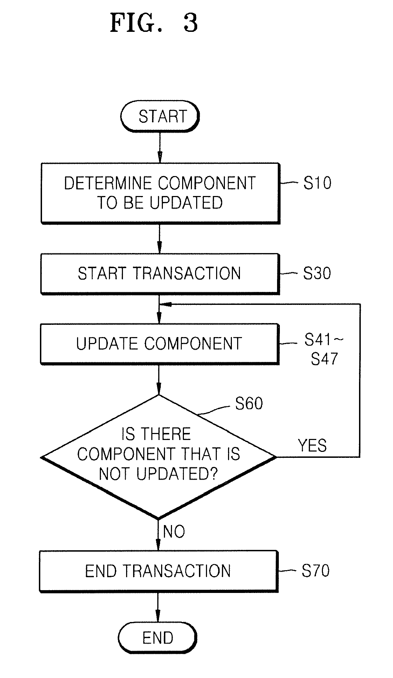

When the software update is unexpectedly stopped, a software update error is raised. For recovering the error, the state information on the update transaction is maintained and the state information on the component is changed according to process. In the current exemplary embodiment, the state information on the update transaction may be "start" or "end". The state information on the component may be "download", "update", or "done", etc. FIG. 3 is a flowchart illustrating a method of updating a plurality of software components according to an exemplary embodiment of the present invention. Referring to FIG. 3, components to be updated are determined by comparing current version information on components installed in an apparatus with versions of components stored in a server via communication with the server (S10).

If it is determined that components to be updated exist, an update transaction is started (S30). One of the components is updated according to a process illustrated in FIG. 2B (S41 through S47). If it is determined that a plurality of components are to be updated, i.e., if it is determined that other components are to be updated (S60), operations S41 through S47 are repeated. If it is determined that no component to be updated is existed, the update transaction is ended (S70).

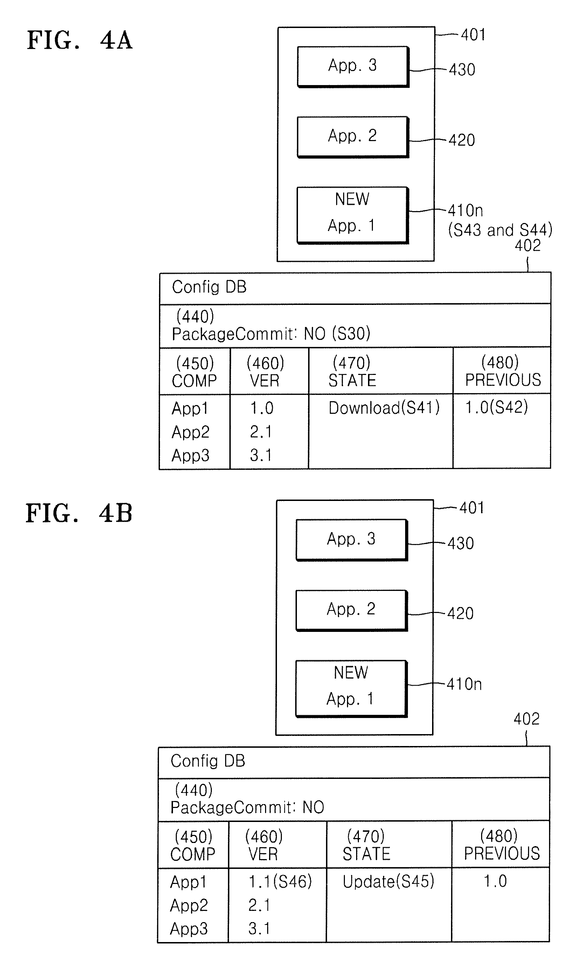

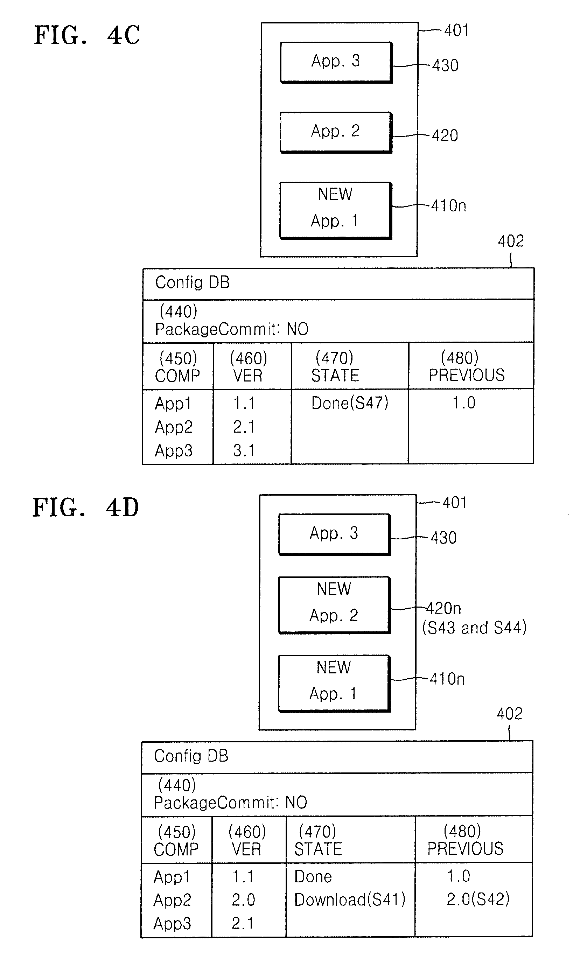

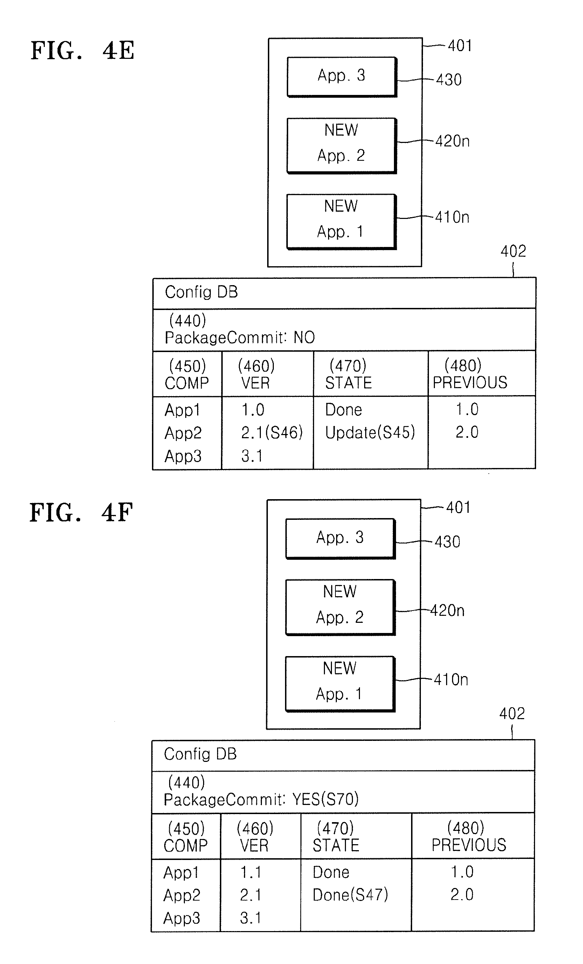

FIGS. 4A, 4B, 4C, 4D, 4E, and 4F illustrate changes of memory contents by a software update method according to an exemplary embodiment of the present invention. A non-volatile memory 401 initially includes three software components App.1 (not shown), App.2 420, and App.3 430. The configuration information on the software components is recorded in a component configuration DB Config DB 402. The configuration information may include transaction state information PackageCommit 440, component identifiers COMP 450, current version information VER 460, state information STATE 470, previous version information PREVIOUS 480, etc.

Referring to FIG. 4A, PackageCommit 440, which is the transaction state information is set as "NO" (S30). This unit that a transaction is started and not committed yet. The state information 470 of the software component App.1 that is an update object is changed to "download" (S41), the previous version information 480 is changed to the current version information 460, i.e., 1.0 (S42), a previous version of the software component App.1 is deleted, and a new version of the software component App. 1, i.e., New App.1 410n, is downloaded and stored (S43 and S44).

Referring to FIG. 4B, the state information 470 of the software component App.1 is changed to "update" (S45), and the current version information 460 is changed to a version 1.1 of the newly downloaded component (S46).

Referring to FIG. 4C, the state information 470 of the software component App.1 is changed to "done" (S47) to indicate that the update of the software component App.1 is successfully finished.

Referring to FIGS. 4D, 4E, and 4F, the software component App.2 420 is updated similarly to the software component App.1. Referring to FIG. 4D, the state information 470 of the software component App.2 420 is changed to "download" (S41), the previous version information 480 is changed to the current version information 460, i.e., 2.0 (S42), the previous version of software component App.2 is deleted, and a new version of a software component New App.2 420n is downloaded and stored (S43 and S44). Referring to FIG. 4E, the state information 470 of the software component App.2 is changed to "update" (S51), and the current version information 460 is changed to a version 2.1 of the newly downloaded component (S52). Referring to FIG. 4F, the state information 470 of the software component App.2 is changed to "done" (S53) to indicate that the update is successfully finished, and the PackageCommit 440 is set as "YES" (S54). This means that the update transaction is committed and ended.

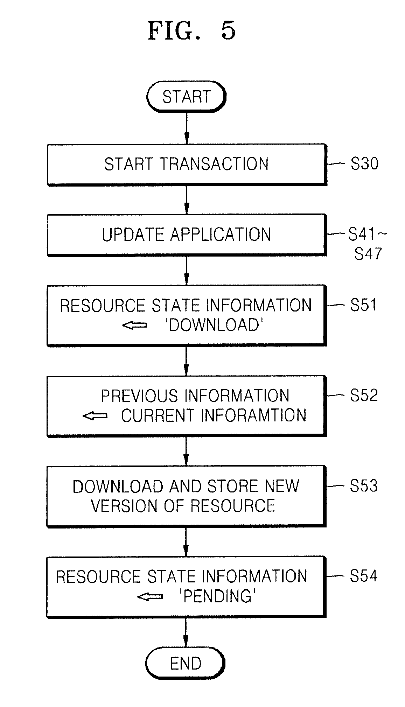

FIG. 5 is a flowchart illustrating a method of updating an application and a resource according to an exemplary embodiment of the present invention. The resource used by the application is a component that is loaded to a RAM only when it is necessary, unlike the application. In the current exemplary embodiment, state information on a transaction is "start" or "end", and state information on a component is "download", "update", or "done", "pending", etc.

The state information on a transaction is recorded as "start" to start the transaction (S30), a new version of an application is downloaded from a server through a network to update the application (Operations 41 through 47) using the method illustrated in FIG. 2B.

The state information on the resource is changed to "download" (S51), previous information on the resource is changed to current information on a currently stored resource (S52), and a new version of a resource is downloaded from the server and is stored (S53). The state information on the resource is changed to "pending" (S54) to finish the update process without deleting an existing file and ending the transaction. If the existing resource is deleted like the application update, an existing application that is loaded and being executed in the RAM may use a new version of a resource, which causes incompatibility between the application and the resource.

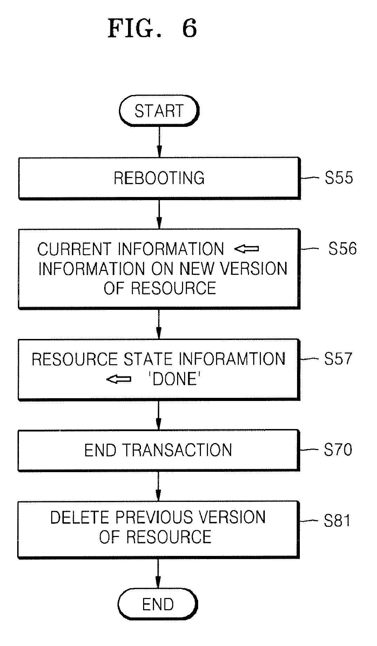

FIG. 6 is a flowchart illustrating a system rebooting method when both application and resource are updated according to an exemplary embodiment of the present invention. When rebooted, if state information on a resource update is "pending", the system recognizes that an update process was finished without ending a transaction before the system rebooting (S55).

In this regard, the current information on the resource (component) whose state information is "pending" is changed to information on a resource of a new version (S56), so that a new version of an application that is loaded and executed in a memory at the time of the system rebooting can use the new version of the resource. The state information on the resource is changed to "done" to indicate that the resource update is ended (S57), and the state information on the transaction is changed to "end" to commit the transaction (S70). At this time the previous version of the resource may be deleted (S81).

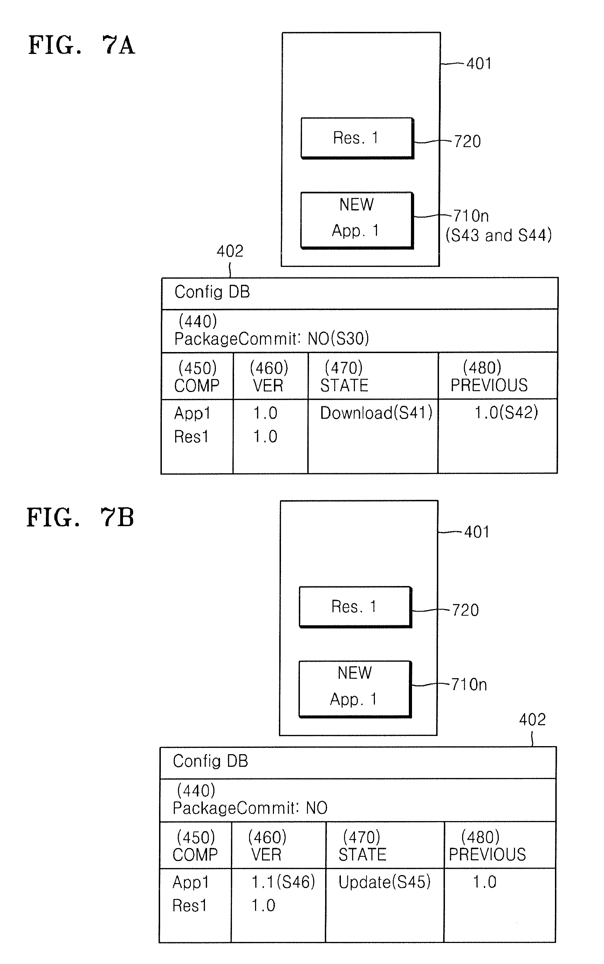

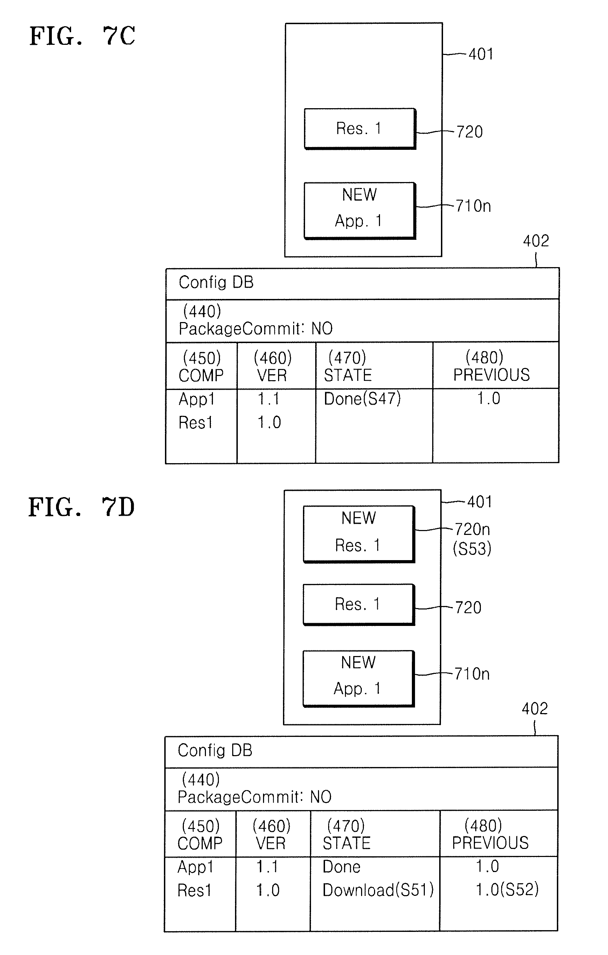

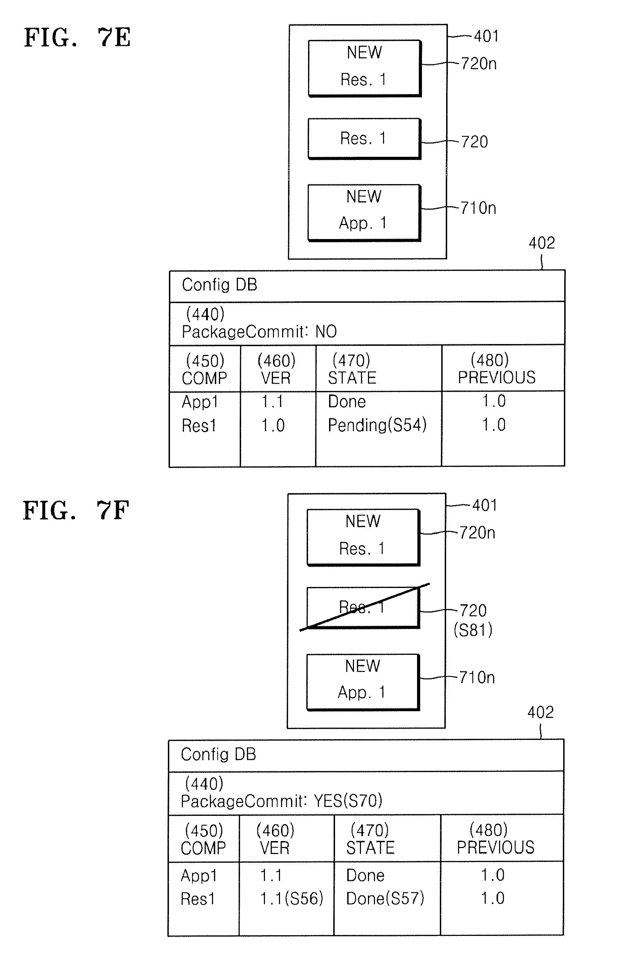

FIGS. 7A, 7B, 7C, 7D, 7E, and 7F illustrate a memory content change process when both application and resource are updated according to an exemplary embodiment of the present invention.

A non-volatile memory 401 initially includes two software components, i.e., an application App.1 (not shown) and a resource used by the application Res. 1 720. The configuration information on the software components is recorded on component configuration DB Config DB 402. The configuration information may include transaction state information PackageCommit 440, component identifiers COMP 450, current version information VER 460, state information STATE 470, previous version information PREVIOUS 480, etc.

FIGS. 7A, 7B, and 7C illustrate processes of updating the application App.1. Referring to FIG. 7A, PackageCommit 440 that is the transaction state information is set as "NO" (S30). This means that a transaction is started. The state information 470 of the component App.1 is changed to "download" (S41), the previous version information 480 is changed to the current version information 460, i.e., 1.0 (S42), the component App.1 of a previous version is deleted, and a new version of a component New App.1 710n is downloaded and stored (S43 and S44). Referring to FIG. 7B, the state information 470 of the component App.1 is changed to "update" (S45), and the current version information 460 is changed to a version 1.1 of the newly downloaded component (S46). Referring to FIG. 7C, the state information 470 of the component App.1 is changed to "done" (S47) to indicate that the update of the component App.1 is successfully finished.

FIGS. 7D, 7E, and 7F illustrate processes of updating the component Res.1 720. Referring to FIG. 7D, the state information 470 of the component Res.1 720 is changed to "download" (S51), the previous version information 480 is changed to the current version information 460, i.e., 1.0 (S52), and a new version of a new component New Res. 1 720n is downloaded and stored (S53) while the previous version of the component Res.1 720 is maintained. Referring to FIG. 7E, the state information 470 of the component Res.1 is changed to "pending" (S54). The process illustrated in FIG. 7F is performed after the system is rebooted. The current version information 460 of the "pending" component Res.1 is changed to a version 1.1 of the newly downloaded component New Res. 1 720n (S56). The state information 470 of the "pending" component Res.1 is changed to "done" (S57) to indicate that the update of the component Rep.1 is successfully finished. The PackageCommit 440 is set as "YES" (S70), and the previous version of the resource 720 is deleted (S81).

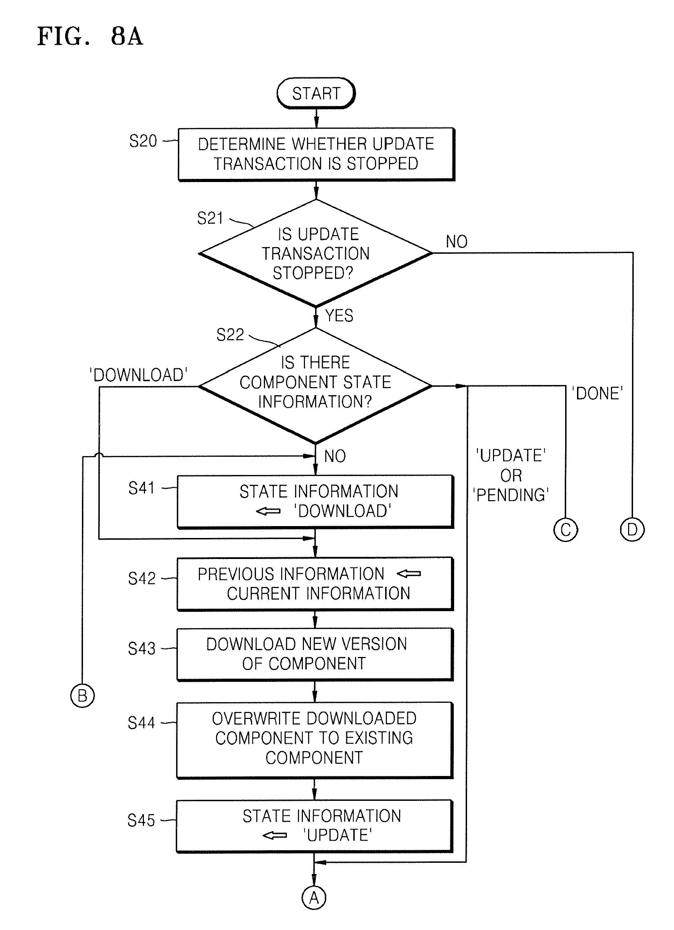

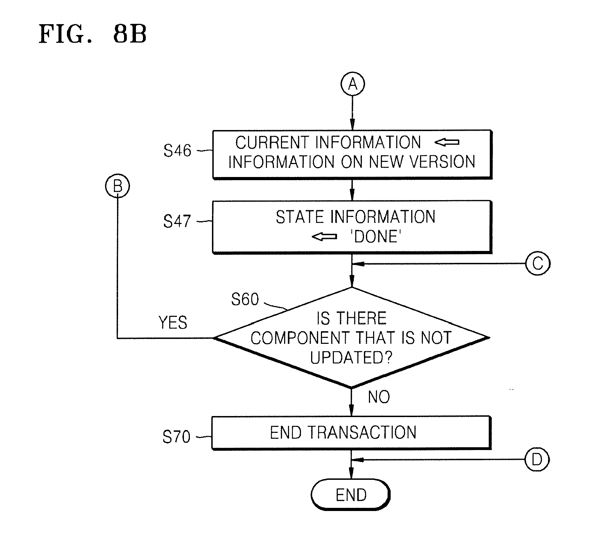

FIGS. 8A and 8B are flowcharts illustrating a software update error recovery mechanism according to an exemplary embodiment of the present invention. Referring to FIGS. 8A and 8B, it is determined whether the software update is stopped based on the state information on the transaction. If the state information on the transaction is "start", it is determined that the software update is stopped (S20).

If the update transaction is stopped (S21), the state information on a component is checked to determine the component whose update is stopped, and the update transaction is recovered according to the state information on the component whose update is stopped (S22). Since the state information on each of components is updated according to each of operations, the update transaction can be recovered by performing an operation after the current state of the component whose update is stopped.

If there is no state information on the component whose update is stopped, it may be a value "null". Since the update is not started but the transaction is stopped, the update process of the component is anew performed (S41 through S47).

If the state information on the component whose update is stopped is "download", it is determined that the update of the component fails while a previous version of a component file is deleted or a new component file is downloaded. Therefore, a process of changing the previous version information is performed (S42 through S47).

If the state information on the component whose update is stopped is "update", since a new version of a component is successfully downloaded and stored, the current information on the component is changed to information on the new version of the component (S46), and the state information on the component is changed to "done" (S47).

If the state information on the component whose update is stopped is "done", since the update of the component is successfully finished, it is determined whether there is a component which is not updated (S60), and the component is updated.

If the state information on the component whose update is stopped is "pending", the update of the component is stopped due to a system crash after the resource is downloaded or the system is rebooted after the system is normally ended. The current information on the component is changed to the information on the resource of the new version (S46), and the state information on the resource is changed to "done" (S47).

After the component whose update is stopped is recovered, it is determined that there is a component which is not updated (S60). After all components that are not updated are completely updated, the state information on the transaction is changed to "end" to end the transaction (S70).

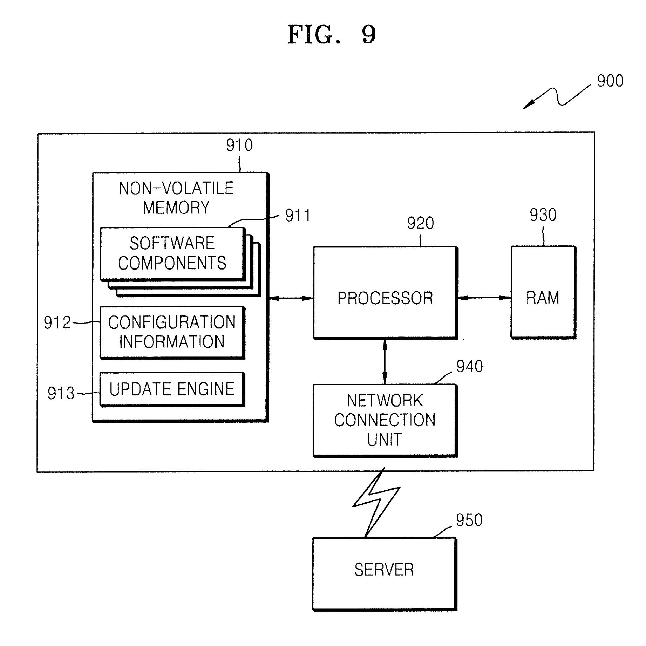

FIG. 9 is a block diagram of a software update system according to an exemplary embodiment of the present invention. Referring to FIG. 9, the software update system comprises a non-volatile memory 910, a processor 920, a RAM 930, and a network connection unit 940, and is connected to a server 950 through the network connection unit 940.

The non-volatile memory 910 comprises a plurality of software components 911, configuration information 912 including information on the update of each of the components, and an update engine 913 that performs the software update using the configuration information 912. The component configuration information 912 includes state information on an update transaction, component identifiers, and previous information, current information and state information on each component. The software update system further comprises a RAM 930 that temporarily stores the components 911 and the update engine 913, and the network connection unit 940 for downloading a new version of a component from the server 950.

The processor 930 loads the software components 911 and the update engine 913 to the RAM 930 and executes them. The update engine 913 is a program that performs the component update by storing the new version of the component downloaded through the network connection unit 940 in the non-volatile memory 910, and changing the configuration information 912.

The update engine 913 changes the state information on a component to be updated to "download", changes previous information on the component to current information on the component, deletes the component to store the new version of the component, changes the state information on the component to "update", changes the current information on the component to information on the new version of the component, changes the state information on the component to "done" to perform the component update.

When the components to be updated include an application and a resource used by the application, the update engine 913 updates the application first, downloads a new version of a resource from the server 950 through the network connection unit 940 without deleting the existing resource, and changes state information on the resource to "pending". At the time of rebooting a system 900, the update engine 913 changes current information on the "pending" resource to information on the new version of the resource, and changes the state information on the resource to "done", thereby finishing the update of the resource.

At the time of booting the system 900, the update engine 913 determines whether the component update is stopped based on the configuration information 912 of the non-volatile memory 910. If it is determined that the component update is stopped, the update engine 913 checks the component whose update is stopped based on the state information on the component, and performs a process after the component update is stopped according to the state information on the component, thereby recovering an error occurred in the component update.

The present invention can also be embodied as computer readable code on a computer readable recording medium.

As described above, preferred embodiments of the present invention can effectively update software and recover an update error in a device such as a portable terminal having limited storage, and solve version incompatibility between an application and a resource according to the software update.

While this invention has been particularly shown and described with reference to exemplary embodiments thereof, it will be understood by those skilled in the art that various changes in form and details may be made therein without departing from the spirit and scope of the invention as defined by the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A method of updating a software component installed in a device connected to a server, the method comprising:
performing an update transaction of downloading a new version of the software component from the server and overwriting a current version of the software component to be updated with the new version of the software component, while managing state information on the update transaction and state information on the software component.

2. The method of claim 1, wherein the performing of the update transaction comprises:
changing the state information on the update transaction according to processing of the update transaction;
changing the state information on the software component according to processing of the software component to be updated; and
updating the software component according to the state information on the software component.

3. The method of claim 1, wherein the performing of the update transaction comprises:
starting the update transaction by recording the state information on the update transaction as "start";
downloading the new version of the software component by changing the state information on the software component to "download", changing previous information on the software component to current information on the software component, downloading the new version of the software component from the server, deleting the current version of the software component, and storing the new version of the software component;
updating the software component by changing the state information on the software component as "update", and changing current information on the software component to new information on the new version of the software component;
completing the updating of the software component by changing the state information on the software component to "done"; and
ending the transaction by changing the state information on the update transaction to "end".

4. The method of claim 3, wherein the previous information, the current information, and the new information further comprise information on a version of the software component.

5. The method of claim 4, wherein the previous information, the current information, and the new information further comprise a memory address of the software component.

6. The method of claim 4 or claim 5, further comprising comparing the current version information on the software component installed in the device with software component version information stored in the server to determine a software component to be updated.

7. The method of claim 6, further comprising if it determined that a plurality of software components are to be updated, downloading, updating, and completing each of the plurality of software components between starting and ending the update transaction.

8. A method of updating an application installed in a device connected to a server and a resource used by the application, the method comprising:
downloading a new version of the application from the server and updating the application; and
downloading a new version of a resource from the server, rebooting the device, and then changing current information on the resource to information on the new version of the resource.

9. A method of updating an application installed in a device connected to a server and a resource used by the application, the method comprising:
starting a transaction by recording state information on the transaction as "start";
updating the application by downloading a new version of the application from the server;
changing state information on the resource to "download", changing previous information on the resource to current information on the resource, and downloading a new version of the resource from the server; and
changing the state information on the resource to "pending".

10. The method of claim 9, further comprising:
at the time of rebooting the device, changing current information on the "pending" resource to information on the new version of the resource, and changing the state information on the resource to "done"; and
ending the transaction by changing the state information on the transaction to "end".

11. The method of claim 10, further comprising deleting a previous version of the resource.

12. The method of claim 11, wherein the updating of the application comprises:
changing state information on the application to "download", changing previous information on the application to current information on the application, downloading a new version of the application from the server, and overwriting a current version of the application with the new version of the application;
changing the state information on the application to "update", and changing the current information on the application to information on the new version of the application; and
changing the state information on the application to "done".

13. The method of claim 12, wherein the previous information, the current information, the information on the new version of the resource, and the information on the new version of the application comprise version information on the corresponding application.

14. The method of claim 13, wherein the previous information, the current information, the information on the new version of the resource, and the information on the new version of the application further comprise a memory address of the corresponding application.

15. A method of updating a software component installed in a device connected to a server, the method comprising:
determining whether a software update is stopped before a transaction is ended; and
if the transaction is stopped, recovering the transaction by determining a software component whose update is stopped by checking state information on the software component, and performing at least one process after the update is stopped according to the state information on the software component whose update is stopped.

16. The method of claim 15, wherein, if state information on the transaction is "start", it is determined that the software update is stopped.

17. The method of claim 15 or claim 16, wherein the recovering of the transaction further comprises:
if there is no state information on the software component whose update is stopped, changing the state information on the software component to "download", changing the previous information on the software component to the current information on the software component, downloading a new version of the software component from the server, overwriting the current version of the software component with a new version of the software component, changing the state information on the software component to "update", changing the current information on the software component to new information on the new version of the software component, and changing the state information on the software component to "done";
if the state information on the software component whose update is stopped is "download", changing the previous information on the software component to the current information on the software component, downloading the new version of a software component from the server, overwriting the current version of the software component with the new version the software component, changing the state information on the software component to "update", changing the current information on the software component to new information on the software component, and changing the state information to "done";
if the state information on the software component whose update is stopped is "update", changing the current information on the software component to the new information on the software component, and changing the state information on the software component to "done"; and
if the state information on the software component whose update is stopped is "pending", changing the current information on the software component to the new information on the software component, and changing the state information on the software component to "done".

18. The method of claim 17, wherein the previous information, the current information, and the new information comprise information on a version of the software component.

19. The method of claim 18, wherein the previous information, the current information, and the new information further comprise a memory address of the software component.

20. The method of claim 18 or claim 19, further comprising:
comparing current version information on the software component installed in the device with a software component version stored in the server, and determining a software component to be updated; and
if there is a software component to be updated other than the software component whose update is stopped, changing state information on the software component to be updated to "download", changing previous information on the software component to be updated to current information, downloading the new version of a software component to be updated from the server, overwriting the current version of the software component to be updated with the new version of the software to be updated, changing state information on the software component to be updated to "update", changing the current information on the software component to be updated to new information, and changing the state information on the software component to be updated to "done".

21. The method of claim 20, further comprising ending the transaction by changing the state information on the transaction to "end".

22. A computer readable medium having embodied there on a computer program for executing a software update method of updating an application installed in a device connected to a server and a resource used by the application, the method comprising:
downloading a new version of the application from the server and updating the application; and
downloading a new version of the resource from the server, rebooting the device, and then changing current information on the resource to information on the new version of the resource.

23. A software update system for updating a software component installed in a device, the system comprises:
a network connection unit which downloads a new version of a software component from a server;
a non-volatile memory which stores a plurality of software components, configuration information including information on an update of each of the software components, and an update engine that updates the software component to the new version of the software component using the configuration information;
a random access memory (RAM) which temporarily stores the software component and the update engine; and
a processor which loads the software component and the update engine to the RAM and executes the software component and the update engine.

24. The system of claim 23, wherein the configuration information comprises state information on an update transaction, software component identifiers, software component previous information, software component current information, and software component state information.

25. The system of claim 24, wherein the update engine changes state information on a software component to be updated to "download", changes previous information on the software component to be updated to current information, overwrites the software component to be updated with the new version of the software component, changes the state information on the software component to be updated to "update", changes the current information on the software component to be updated to information on the new version of the software component, and changes the state information on the software component to be updated to "done".

26. The system of claim 25, wherein, if an application and a resource used by the application are to be updated, the update engine updates the application, downloads a new version of a resource from the server through the network connection unit without deleting the resource, and changes state information on the resource to "pending",
at the time of rebooting the device, the update engine changes current information on the "pending" resource to information on the new version of the resource, and changes the state information on the resource to "done".

27. The system of claim 25 or claim 26, wherein, at the time of booting the device, the update engine determines whether the software component update is stopped based on the configuration information, if it is determined that the software component update is stopped, checks the software component whose update is stopped based on the state information on the software component, and performs at least one process after the software component update is stopped according to the state information on the software component whose update is stopped.
